(19) Europäisches Patentamt

European Patent Office

Office européen des brevets

(11) EP 2 536 921 B1

(12) **FASCICULE DE BREVET EUROPEEN**

(45) Date de publication et mention de la délivrance du brevet:
**29.07.2015 Bulletin 2015/31**

(21) Numéro de dépôt: **11708548.0**

(22) Date de dépôt: **11.02.2011**

(51) Int Cl.:
*F01D 17/08* (2006.01)      *F01D 21/00* (2006.01)
*G01L 27/00* (2006.01)

(86) Numéro de dépôt international:
**PCT/FR2011/050285**

(87) Numéro de publication internationale:
**WO 2011/101579 (25.08.2011 Gazette 2011/34)**

(54) **PROCÉDÉ ET DISPOSITIF DE CORRECTION D'UNE MESURE DE PRESSION D'UN FLUX GAZEUX CIRCULANT DANS UN MOTEUR D'AÉRONEF.**

VERFAHREN UND VORRICHTUNG ZUR KORREKTUR EINER DRUCKMESSUNG EINES GASSTROMS IN EINEM FLUGZEUGMOTOR

METHOD AND DEVICE FOR CORRECTING A PRESSURE MEASUREMENT OF A FLOW OF GAS FLOWING IN AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2010 FR 1051169**

(43) Date de publication de la demande:
**26.12.2012 Bulletin 2012/52**

(73) Titulaire: **Snecma**
**75015 Paris (FR)**

(72) Inventeurs:
• **GAULLY, Bruno, Robert**
**F-91630 Marolles en Hurepoix (FR)**

• **VERNOCHET, Maurice, Georges**
**F-77000 La Rochette (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A2- 0 188 909      FR-A1- 2 886 981
JP-A- 2006 348 778      JP-A- 2009 002 875
US-A- 4 598 381      US-A1- 2009 222 230**

**Description**

Arrière-plan de l'invention

La présente invention concerne le domaine général de l'aéronautique. Elle s'applique de façon privilégiée mais non limitative aux turbomachines, et notamment aux turboréacteurs.

L'invention concerne plus particulièrement la mesure de paramètres de fonctionnement d'un moteur d'aéronef, tels que par exemple la pression d'un flux gazeux circulant dans le moteur.

De façon connue, le contrôle et la régulation d'un moteur d'avion sont réalisés à partir de mesures fournies par des calculateurs dédiés de l'avion, qui s'appuient sur des technologies de capteurs connues pour leur stabilité et leur précision. C'est le cas notamment de la pression atmosphérique, notée PO, qui est fournie par un calculateur dédié aux paramètres atmosphériques (ou « Air Data Computer » en anglais), utilisant par exemple des capteurs de type à quartz ou à cylindres vibrants précis à long terme.

Par souci de simplification, on désignera, dans la suite de la description, par « mesures avion » les mesures de pression fournies par ces calculateurs dédiés de l'avion.

La mesure avion de la pression atmosphérique est utilisée par l'unité de contrôle et de régulation du moteur (aussi connu sous le nom de FADEC pour Full Authority Digital Engine Control) notamment pour réguler la poussée du moteur de l'avion. Compte-tenu de l'importance de ce paramètre, le FADEC dispose également d'une mesure de la pression atmosphérique réalisée par un autre capteur, celui-ci étant embarqué dans le calculateur moteur de l'avion.

Cette mesure, dite « mesure moteur » (par opposition à la mesure avion), est utilisée en cas de perte des mesures avion de la pression atmosphérique, pour limiter la variation de poussée du moteur. Elle doit donc être précise, et est encadrée par une réglementation draconienne visant à respecter une variation maximale de la poussée en cas de perte des mesures avion.

Pour respecter cette réglementation, une première solution envisagée par les motoristes consiste à recourir à des capteurs moteur ayant de bonnes performances, i.e., proches de celles des capteurs avion. Toutefois, de tels capteurs sont très coûteux du fait de leur précision.

Par ailleurs, les capteurs embarqués sur le moteur sont soumis à un environnement thermomécanique bien plus sévère que les capteurs avion. Par conséquent, il est très difficile, généralement, de garantir la stabilité des performances de ces capteurs sur une utilisation à long terme.

Ainsi, il est courant qu'un capteur moteur, après plusieurs années d'utilisation, présente une erreur de dérive importante (aussi connue sous le nom d'« erreur de zéro » ou d'« offset » en anglais). Le capteur devant continuer à respecter la réglementation en vigueur malgré cette erreur de dérive importante, il est nécessaire que sa précision à l'état neuf soit très grande pour rester le plus longtemps possible dans sa bande de tolérance.

Le document EP 0 188 909 décrit un procédé et un dispositif pour compenser une erreur de capteur dans un système évaluant une pression dynamique, et pouvant être utilisé pour calculer la vitesse de vol d'un avion.

Ce document montre les caractéristiques techniques du préambule des revendications indépendantes 1 et 5.

Objet et résumé de l'invention

La présente invention a pour but notamment de pallier ces inconvénients en proposant un procédé de correction d'une mesure courante de pression d'un flux gazeux circulant à l'intérieur d'un moteur propulsant un aéronef, cette mesure étant délivrée au cours d'une mission de l'aéronef par un capteur embarqué dans le moteur. Conformément à l'invention, ce procédé de correction comporte : - une étape d'estimation d'une erreur de dérive affectant le capteur, à partir d'une différence existant entre : o une mesure de calibrage de la pression du flux gazeux, délivrée par le capteur embarqué dans le moteur ; et o une mesure de pression atmosphérique délivrée par un capteur de l'aéronef, ce capteur de l'aéronef étant doté d'une précision de mesure supérieure à celle du capteur embarqué dans le moteur ; la mesure de calibrage et la mesure de pression atmosphérique étant réalisées dans des conditions pour lesquelles le capteur embarqué dans le moteur et le capteur de l'aéronef sont soumis à une même pression atmosphérique environnante ; et

- une étape de soustraction de l'erreur de dérive estimée à la mesure courante de pression du flux gazeux.

Corrélativement, l'invention vise également un dispositif de correction d'une mesure courante de pression d'un flux gazeux circulant à l'intérieur d'un moteur propulsant un aéronef, cette mesure étant délivrée au cours d'une mission de l'aéronef par un capteur embarqué dans le moteur, ce dispositif comportant :

- des moyens pour acquérir :

    o une mesure de calibrage de la pression du flux gazeux, délivrée par le capteur embarqué dans le moteur ; et
    o une mesure de pression atmosphérique délivrée par un capteur de l'aéronef, ce capteur de l'aéronef étant doté d'une précision de mesure supérieure à celle du capteur embarqué dans le moteur ;

la mesure de calibrage et la mesure de pression atmosphérique étant réalisées dans des conditions pour lesquelles le capteur embarqué dans le moteur et le capteur de l'aéronef sont soumis à une même pression atmosphérique environnante ;

- des moyens pour estimer une erreur de dérive affectant le capteur embarqué dans le moteur à partir d'une différence existant entre la mesure de calibrage et la mesure de pression atmosphérique ; et
- des moyens pour soustraire, à la mesure courante de pression du flux gazeux, l'erreur de dérive estimée.

On notera qu'au sens de l'invention, la désignation « capteur de l'aéronef » s'oppose à la désignation « capteur embarqué dans le moteur », et désigne un capteur placé dans l'aéronef à l'extérieur du moteur.

L'invention propose donc de corriger des mesures moteur de pression de flux gazeux circulant dans le moteur à l'aide de mesures avion de la pression atmosphérique. Ces mesures avion sont réputées, du fait des capteurs classiquement utilisés dans les aéronefs, pour leur précision et leur stabilité.

Les mesures moteur courantes corrigées par l'invention peuvent concerner des pressions de flux gazeux mesurées en divers endroits du moteur : il peut s'agir par exemple de la pression atmosphérique en entrée du moteur, de la pression du flux gazeux en sortie de la soufflante lorsque le moteur est un turboréacteur, etc. L'invention permet notamment la correction de mesures de pression utilisées pour la régulation de la poussée ou pour la surveillance du moteur, dès lors que cette pression a une plage de valeurs supérieure ou égale à la plage de valeurs de la pression atmosphérique.

Ainsi, il n'est plus nécessaire d'embarquer dans le moteur des capteurs très précis et très coûteux puisque l'invention permet avantageusement de compenser l'imprécision des capteurs moteur. L'invention s'appliquera de façon privilégiée aux capteurs moteur dont l'imprécision résulte essentiellement d'une erreur de dérive.

Plus particulièrement, l'invention propose d'estimer l'erreur de zéro du capteur moteur à partir de mesures de la pression atmosphérique réalisées lors de points de fonctionnement prédéterminés du moteur et de l'aéronef, et de soustraire cette estimation à la mesure moteur pour corriger la dérive du capteur embarqué sur le moteur.

On entend ici par erreur de dérive ou erreur de zéro, l'erreur commise sur une mesure d'une variable X alors que cette variable a une valeur nulle. L'erreur de dérive ne dépend pas de la valeur de la variable mesurée.

Les points de fonctionnement choisis pour estimer l'erreur de dérive correspondent à des conditions dans lesquelles le capteur embarqué dans le moteur et le capteur de l'aéronef sont soumis à une même pression atmosphérique environnante. Bien entendu, on tiendra compte, pour vérifier cette contrainte, des écarts d'altitude d'installation des capteurs, autrement dit de la différence d'altitude entre le capteur moteur et le capteur avion considérés.

Ainsi, préférentiellement, les mesures seront réalisées lors d'un arrêt du moteur (i.e. avant le démarrage du moteur ou pour une température calculateur moteur donnée après un temps d'arrêt donné du moteur, dans le but d'éliminer l'erreur liée à l'hystérésis en température) et lors d'un maintien de l'aéronef immobile au sol, c'est-à-dire, par exemple, pour un avion propulsé par un turboréacteur, juste après l'initialisation du FADEC.

Dans de telles conditions, les postes d'imprécision autres que l'erreur de dérive pouvant affecter les capteurs avion et moteur, tels que par exemple les erreurs de calibration, l'hystérésis en pression et/ou en température, l'environnement des capteurs, ont une influence limitée sur les mesures délivrées par les capteurs avion et moteur, ou tout du moins, ils ont une influence relativement similaire sur les mesures délivrées par le capteur avion et sur les mesures délivrées par le capteur moteur.

Autrement dit, dans de telles conditions, une différence entre la valeur de la pression considérée du flux gazeux circulant dans le moteur délivrée par le capteur embarqué sur le moteur et la valeur de pression atmosphérique délivrée par le capteur de l'aéronef, sera essentiellement imputée par l'invention à l'erreur de dérive affectant le capteur embarqué sur le moteur. Le capteur de l'aéronef étant plus précis et stable que le capteur moteur, on considère en effet qu'il présente une erreur de dérive négligeable.

Par conséquent, en soustrayant cette différence à la mesure moteur lorsque l'aéronef est en cours de mission, on obtient une mesure plus précise de la pression du flux gazeux, et ce, quel que soit le régime de fonctionnement de l'aéronef et du moteur.

Grâce à l'invention, il est donc possible pour les motoristes de recourir à des capteurs faible coût, sujets à une erreur de dérive même importante, et ce, tout en garantissant une précision de mesure qui permet de se conformer à la réglementation en vigueur (i.e. variation de poussée maximale à respecter lors de la perte des mesures avion).

L'estimation de l'erreur de dérive peut de surcroît être réalisée à divers moments de la vie des équipements de l'aéronef, afin de corriger une éventuelle dérive dans le temps du capteur embarqué sur le moteur.

Selon un autre aspect, l'invention vise également une turbomachine comprenant un dispositif de correction conforme à l'invention.

Dans un mode particulier de réalisation, les différentes étapes du procédé de correction sont déterminées par des instructions de programmes d'ordinateurs.

En conséquence, l'invention vise aussi un programme d'ordinateur sur un support d'informations, ce programme étant susceptible d'être mis en oeuvre dans un dispositif de correction ou plus généralement dans un ordinateur, ce programme comportant des instructions adaptées à la mise en oeuvre des étapes d'un procédé de correction tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système de mesure de pression d'un flux gazeux circulant à l'intérieur d'un moteur propulsant un aéronef comprenant :

- un premier capteur de pression du flux gazeux, ce premier capteur étant embarqué dans le moteur ;
- un second capteur de pression atmosphérique, embarqué dans l'aéronef à l'extérieur du moteur et doté d'une précision de mesure supérieure à celle du premier capteur ;
- des moyens de déclenchement ;

  o d'une mesure de calibrage de la pression du flux gazeux par le premier capteur ; et
  o d'une mesure de la pression atmosphérique par le second capteur ;

  dans des conditions pour lesquelles le premier capteur et le second capteur de l'aéronef sont soumis à une même pression atmosphérique environnante ; et
- un dispositif de correction selon l'invention, adapté à corriger une mesure courante de pression délivrée au cours d'une mission de l'aéronef par le premier capteur et à estimer l'erreur de dérive affectant le premier capteur à partir d'une différence existant entre la mesure de pression atmosphérique et la mesure de calibrage.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, dans son environnement, un dispositif de correction conforme à l'invention dans un mode particulier de réalisation ;
- la figure 2 illustre schématiquement un exemple d'erreur de dérive affectant le capteur moteur représenté sur la figure 1 ; et
- les figures 3A et 3B représentent, sous forme d'organigramme, les principales étapes du procédé de correction selon l'invention, dans un mode particulier de réalisation dans lequel il est mis en oeuvre par le dispositif de la figure 1.

## Description détaillée d'un mode de réalisation

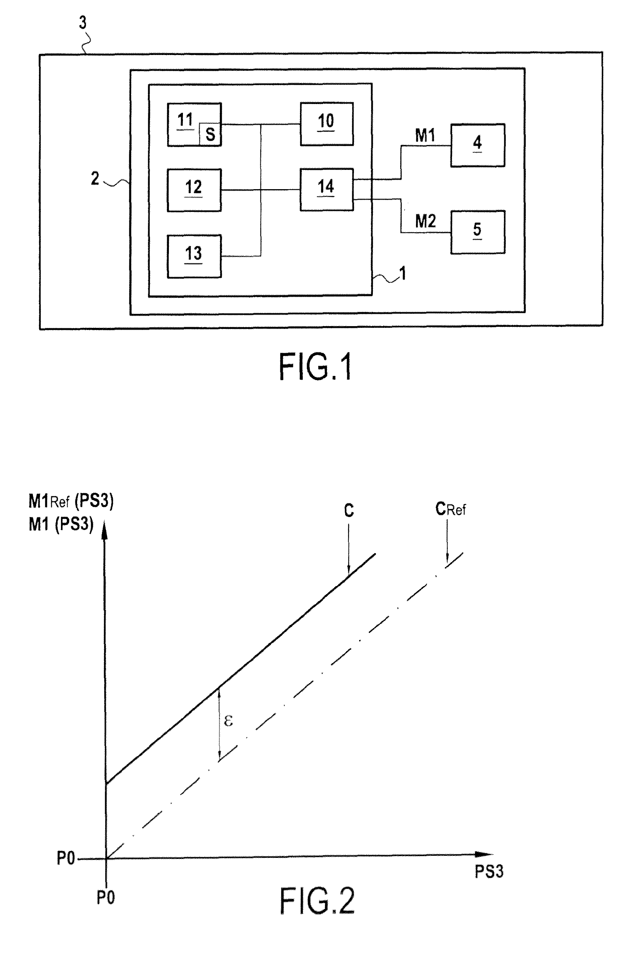

La **figure 1** représente, dans son environnement, un dispositif 1 de correction d'une mesure moteur de pression M1, conforme à l'invention, dans un mode particulier de réalisation.

Dans l'exemple envisagé ici, la mesure M1 est une mesure courante de la pression statique de l'air en sortie du compresseur haute pression d'un turboréacteur 2 propulsant un avion 3. Cette mesure est délivrée au cours d'une mission de l'avion, par un capteur 4 embarqué dans le turboréacteur par exemple sur le carter extérieur du turboréacteur.

Ces hypothèses ne sont toutefois pas limitatives. L'invention permet en effet de corriger des mesures de la pression de l'air ou de tout flux gazeux circulant dans le turboréacteur en d'autres endroits du turboréacteur : par exemple, à l'entrée du turboréacteur, en entrée du compresseur haute pression, en sortie de la soufflante, en sortie de la turbine basse pression, etc.

En outre, l'invention peut également s'appliquer à d'autres types de moteurs d'avion et plus généralement d'aéronefs, et notamment à d'autres turbomachines (ex. turbopropulseur).

Le capteur 4 est ici un capteur de pression piézo-résistif à jauges de contrainte montées en pont de Wheatstone, connu de l'homme du métier. On suppose que le capteur 4 souffre d'imprécision due essentiellement à la présence d'une erreur de dérive.

De façon connue, l'avion 3 est également équipé de divers capteurs, adaptés à mesurer les paramètres de fonctionnement de l'avion et du turboréacteur 2, tels que notamment la pression atmosphérique PO. Ces capteurs sont localisés à l'extérieur du turboréacteur. Ils sont connus pour leur précision et leur stabilité dans le temps (absence de dérive ou quasiment).

Ainsi, notamment, l'avion 3 est équipé d'un capteur 5 de pression à quartz, connu de l'homme du métier, situé par exemple au niveau du cockpit. Bien entendu, d'autres localisations du capteur 5 peuvent être envisagées.

Ce capteur 5 dispose d'une précision de mesure supérieure à la précision du capteur 4, typiquement de l'ordre du millibar ou de quelques hectopascals (hPa).

Dans l'exemple envisagé ici, la précision supérieure du capteur 5 provient également du fait que la pression atmosphérique PO mesurée par le capteur de pression 5 est comprise dans une plage de valeurs incluse dans la plage de valeurs de la pression PS3 mesurée par le capteur 4. A titre d'exemple, il est courant de rencontrer au cours d'une mission d'un aéronef équipé d'un turboréacteur un facteur 30 à 40 entre la pression atmosphérique PO et la pression PS3 en sortie du compresseur haute pression du turboréacteur.

Le capteur de pression 5 est un capteur de l'avion au sens de l'invention. Il est adapté à délivrer une mesure avion M2 de la pression atmosphérique PO au FADEC de l'avion (non représenté sur la figure 1), notamment en vue de permettre la régulation et le contrôle du turboréacteur 2.

On notera que le capteur 4, respectivement le capteur 5, est associé à une chaîne d'acquisition (non représentée sur la figure 1), qui comprend notamment un convertisseur analogique/numérique adapté à délivrer la mesure réalisée par le capteur 4, respectivement le capteur 5, sous forme numérique. Les éléments constituant une chaîne d'acquisition ainsi que leurs principes de fonctionnement étant connus de l'homme du métier, ils ne seront pas détaillés davantage ici.

Ainsi, au sens de l'invention, les mesures M1 et M2, délivrées respectivement par les capteurs 4 et 5, désigneront les sorties numériques des convertisseurs analogique numérique des chaînes d'acquisition de ces capteurs.

Par souci de simplification, dans la suite de la description, le capteur 4 embarqué dans le turboréacteur 2 sera désigné par « capteur moteur 4 », et le capteur 5 de l'avion sera désigné par « capteur avion 5 ».

On notera que l'invention s'applique également à d'autres types de capteurs que ceux envisagés ici. D'autres capteurs bas coût, même présentant une erreur de dérive importante, peuvent être utilisés en guise de capteurs moteur, et d'autres capteurs présentant de bonnes propriétés en termes de précision et de stabilité de leurs performances dans le temps peuvent être envisagés en guise de capteurs avion 5. Par exemple, les capteurs 4 et 5 pourraient être en variante des capteurs à cylindres vibrants.

Le dispositif de correction 1 est, dans le mode de réalisation décrit ici, intégré au FADEC, et possède l'architecture matérielle d'un ordinateur.

Il dispose notamment d'un processeur 10, d'une mémoire morte 11, d'une mémoire vive 12, d'une mémoire non volatile 13, ainsi que de moyens de communication 14 avec le capteur moteur 4 et avec le capteur avion 5.

Ces moyens de communication sont notamment constitués de bus de données numériques connus en soi.

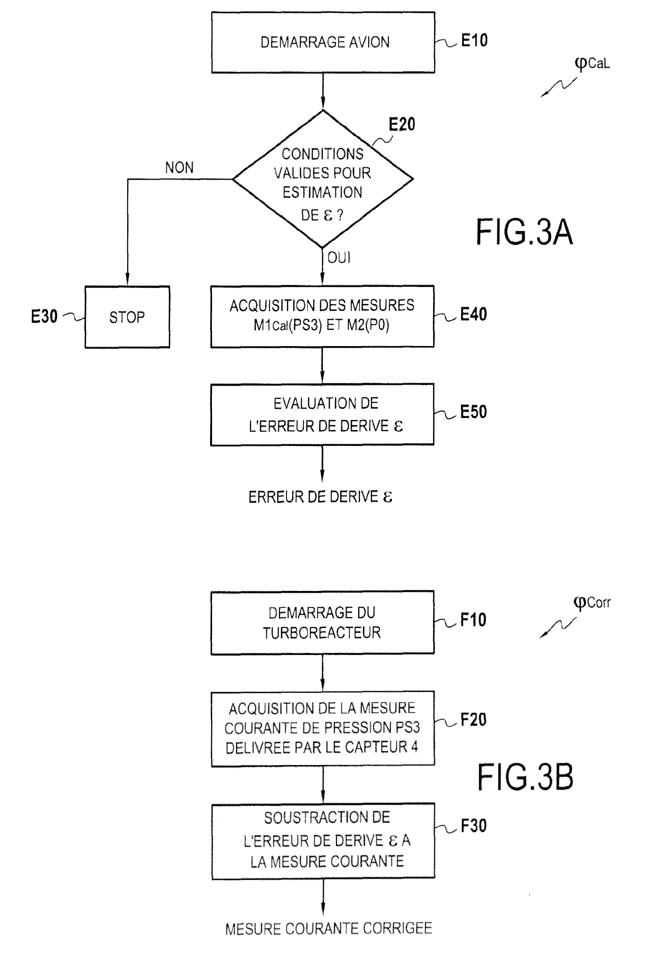

La mémoire morte 11 constitue un support d'enregistrement, lisible par le processeur 10 du dispositif de correction, et sur lequel est enregistré un programme d'ordinateur S comportant des instructions pour l'exécution des étapes d'un procédé de correction conforme à l'invention, telles que représentées sur les figures 3A et 3B décrites ultérieurement.

Comme mentionné précédemment, conformément à l'invention, on corrige les mesures courantes M1, délivrées par le capteur 4 en cours de mission, à l'aide d'une valeur estimée de l'erreur de dérive affectant ce capteur.

La **figure 2** illustre schématiquement l'erreur de dérive affectant le capteur 4.

Sur cette figure, la courbe CRef représente une courbe de référence pour laquelle la mesure de pression M1Ref(PS3) délivrée par le capteur 4 est égale à la pression PS3 réelle de l'air en sortie du compresseur haute pression du turboréacteur 2. Autrement dit, la courbe CRef représente la mesure de pression que devrait délivrer le capteur 4 s'il n'était affecté d'aucun défaut et en particulier d'aucune erreur de dérive.

La courbe C illustre quant à elle, la mesure de pression M1(PS3) réellement délivrée par le capteur 4 en fonction de la pression PS3.

Dans l'exemple envisagé ici, on constate que les courbes CRef et C sont parallèles. Plus précisément, pour chaque valeur de la pression PS3 en sortie du compresseur haute pression, la relation suivante est vérifiée :

$$M1(PS3)=M1Ref(PS3)+ \varepsilon,$$

où $\varepsilon$ est un nombre réel, représentant l'erreur de dérive affectant le capteur 4.

Par souci de simplification, on a négligé sur la figure 2 les autres postes d'imprécision pouvant affecter la mesure de pression délivrée par le capteur 4, tels que par exemple les erreurs de calibration, l'hystérésis en pression et/ou en température et l'environnement du capteur 4. L'erreur de dérive $\varepsilon$ est donc connue à ces postes d'imprécision près.

L'erreur de dérive $\varepsilon$ est indépendante de la pression PS3 mesurée. Elle est, dans l'exemple illustré sur la figure 2, positive. Une erreur de dérive négative est toutefois également possible.

Pour estimer cette erreur de dérive, conformément à l'invention, on utilise deux mesures, notées respectivement M1Cal(PS3) et M2(PO) et réalisées par le capteur moteur 4 et le capteur avion 5, à des moments privilégiés reflétant des points de fonctionnement particuliers du turboréacteur 2 et de l'avion 3.

Ces points de fonctionnement particuliers correspondent à des conditions pour lesquelles le capteur moteur 4 et le capteur avion 5 sont soumis à une même pression atmosphérique P0 environnante, aux écarts d'altitude d'installation entre les capteurs près.

Ainsi, dans de telles conditions, en l'absence d'erreur de dérive, le capteur moteur 4 devrait délivrer une mesure de la pression PS3 identique ou quasi-identique à la mesure de pression atmosphérique PO délivrée par le capteur avion 5 supposée très précise et sensiblement égale à M1Ref(PS3). Le capteur avion étant en effet plus précis et stable que le capteur moteur, on considère qu'il présente une erreur de dérive négligeable.

On notera que l'hypothèse visant à négliger sur la figure 2 les autres postes d'imprécision pouvant affecter la mesure de pression délivrée par le capteur 4 n'a que peu d'impact sur la correction effectuée par l'invention. En effet, comme mentionné précédemment, l'invention propose avantageusement de se placer autour de points de fonctionnement particuliers du turboréacteur 2 et de l'avion 3 pour lesquels l'influence de ces postes sur les mesures avion et sur les mesures moteur est considérée comme similaire, ou tout du moins pour lesquels la différence existant entre ces postes pour les mesures avion et les mesures capteur est minimisée.

Or, le capteur 4 présentant une erreur de dérive $\varepsilon$, il délivre une mesure M1Cal(PS3) telle que :

$$M1Cal(PS3)=M2(P0)+\varepsilon.$$

Autrement dit :

$$\varepsilon= M1Cal(PS3)-M2(P0).$$

Ainsi, avantageusement dans l'invention, on estime simplement l'erreur de dérive $\varepsilon$ affectant le capteur 4 à partir des mesures M1Cal(PS3) et M2(PO).

Nous allons maintenant décrire plus en détails, en référence aux **figures 3A** et **3B**, les principales étapes du procédé de correction selon l'invention, dans un mode particulier de réalisation dans lequel ce procédé est implémenté par le dispositif de correction 1 représenté sur la figure 1. Ces étapes reprennent avantageusement le principe évoqué ci-dessus.

La mise en oeuvre du procédé de correction selon l'invention s'appuie sur deux phases distinctes : une première phase φCal dite de calibrage durant laquelle on estime l'erreur de dérive affectant le capteur 4 (figure 3A), puis une seconde phase φCorr dite de correction durant laquelle on corrige les mesures courantes délivrées par le capteur 4 à l'aide de l'erreur de dérive ainsi estimée (figure 3B).

Comme décrit précédemment, l'estimation de l'erreur de dérive conformément à l'invention nécessite que le capteur moteur 4 et le capteur avion 5 soient soumis à la même pression atmosphérique PO environnante. Ce n'est que lorsque de telles conditions sont remplies que l'on peut utiliser les mesures délivrées respectivement par le capteur 4 et le capteur 5 pour estimer l'erreur de dérive.

Ainsi, en référence à la figure 3A, suite au démarrage de l'avion 3 (étape E10), le processeur 10 détermine dans un premier temps si les conditions précitées d'estimation de l'erreur de dérive $\varepsilon$ sont remplies (étape E20).

De façon connue, lorsque d'une part le turboréacteur 2 se trouve à l'arrêt (c'est-à-dire lorsqu'il ne tourne pas) et d'autre part l'avion 3 est immobile au sol, le capteur moteur 4 et le capteur avion 5 sont soumis à la même pression atmosphérique environnante (aux écarts d'altitude entre les capteurs près) : les conditions d'estimation de l'erreur de dérive sont alors valides.

Ces deux contraintes sont vérifiées notamment à l'issue de la phase d'initialisation du FADEC (qui fait suite à l'actionnement de la commande de démarrage de l'avion 3), avant que l'envoi par le FADEC d'une séquence de démarrage au turboréacteur entrainant sa rotation.

En effet, durant cette phase d'initialisation, le FADEC (et de ce fait, le dispositif de correction 1 intégré au FADEC) est alimenté par le réseau électrique de l'avion 3, le démarreur-générateur du turboréacteur n'étant pas encore sous tension. Le turboréacteur 2 ne tourne donc pas encore et est considéré comme étant à l'arrêt au sens de l'invention.

Puis à l'issue de cette phase d'initialisation, l'ECU (Engine Control Unit) du FADEC envoie une séquence de démarrage au contrôleur du démarreur-générateur du turboréacteur de sorte à modifier l'excitatrice de celui-ci pour passer en mode démarreur. Le démarreur-générateur est alors mis sous tension.

L'ECU commande ensuite divers accessoires du turboréacteur jusqu'à son démarrage proprement dit et sa mise en rotation. L'alimentation électrique de l'ECU et plus généralement du FADEC est alors assurée par le turboréacteur lui-même.

Ainsi, dans le mode de réalisation décrit ici dans lequel on corrige une mesure moteur de la pression PS3 à l'aide d'une mesure avion de la pression PO, les conditions d'estimation de l'erreur de dérive $\varepsilon$ seront considérées comme remplies dès que la fin de la phase d'initialisation du FADEC sera détectée et avant l'envoi de la séquence de démarrage au turboréacteur. En tout état de cause, on s'assurera que le turboréacteur n'est pas déjà animé d'un mouvement de rotation.

Des contraintes similaires peuvent également être considérées lorsque d'autres pressions que la pression PS3 sont envisagées, dès lors que ces pressions sont différentes de la pression atmosphérique PO.

En revanche, lorsque l'on envisage la correction d'une mesure moteur de la pression atmosphérique à l'aide d'une mesure avion de cette pression atmosphérique, la contrainte imposant que le capteur moteur et le capteur avion sont soumis à une même pression atmosphérique pourra être vérifiée dans d'autres situations que lorsque le turboréacteur est à l'arrêt et l'avion est immobile au sol. Une telle contrainte peut en effet également être vérifiée au cours de la mission de l'avion.

Si le processeur 10 détermine que les conditions d'estimation de l'erreur de dérive ne sont pas remplies, le procédé de correction s'arrête (étape E30).

En revanche, si le processeur détermine que les conditions d'estimation de l'erreur de dérive $\varepsilon$ sont remplies, il acquiert les mesures courantes délivrées par le capteur moteur 4 et par le capteur 5 (étape E40).

Ces mesures sont constituées d'une part, par une mesure M1Cal(PS3) dite de calibrage de la pression PS3 délivrée par le capteur moteur 4, et d'autre part, par une mesure M2(P0) de la pression atmosphérique P0 délivrée par le capteur avion 5.

On notera que dans le mode de réalisation décrit ici, le processeur 10 ne fait que récupérer des mesures délivrées par le capteur 4 et le capteur 5 au moment où il détecte que les conditions d'estimation de l'erreur de dérive sont remplies. En variante, le processeur 10 peut être à l'origine du déclenchement de ces mesures, dès qu'il détecte que les conditions d'estimation de l'erreur de dérive sont remplies.

Puis le processeur 10 évalue à partir de ces deux mesures l'erreur de dérive affectant le capteur 4 (étape E50), en calculant la différence existant entre les mesures M1Cal(PS3) et M2(PO) :

$$\varepsilon = \text{M1Cal(PS3)} - \text{M2(P0)}.$$

L'erreur de dérive $\varepsilon$ ainsi estimée est alors stockée dans la mémoire non volatile 13 du dispositif de correction 1.

L'évaluation de l'erreur de dérive est mise en oeuvre ici avant le démarrage à proprement parler du turboréacteur 2. Toutefois en variante, elle peut être mise en oeuvre ultérieurement, dès lors que les mesures M1Cal(PS3) et M2(PO) ont été acquises lorsque le capteur 4 et le capteur 5 étaient soumis à la même pression atmosphérique environnante.

L'étape E50 clôture la phase de calibrage φCal. Cette phase de calibrage peut être mise en oeuvre au démarrage de chaque mission de l'avion 3 ou de façon plus espacée, par exemple, une fois par an, l'erreur de dérive d'un capteur variant lentement en fonction du temps.

Le stockage de l'erreur de dérive $\varepsilon$ dans la mémoire non volatile 13 permet au dispositif de correction 1 d'accéder aisément à la dernière valeur estimée de l'erreur de dérive pour corriger les mesures courantes délivrées par le capteur moteur 4 au cours des prochaines missions de l'avion 3.

En référence à la figure 3B, la phase de correction φCorr des mesures courantes du capteur 4 commence dès le démarrage du turboréacteur (étape F10).

Le processeur 10 du dispositif de correction 1 acquiert chaque mesure courante M1(PS3) de la pression PS3 délivrée par le capteur 4 (étape F20).

Puis il soustrait à cette mesure l'erreur de dérive $\varepsilon$ extraite de la mémoire non volatile 13 (étape F30), afin d'obtenir une mesure corrigée M1Corr(PS3) :

$$\text{M1Corr(PS3)} = \text{M1(PS3)} - \varepsilon.$$

La mesure courante M1Corr(PS3) ainsi corrigée constitue une mesure précise de la pression PS3, dépourvue de toute erreur de dérive. L'invention permet ainsi d'utiliser des capteurs moteur de faible coût tout en respectant la réglementation en vigueur en termes de précision des mesures délivrées par ces capteurs.

On notera que dans l'exemple décrit ici, une mesure de la pression atmosphérique PO est utilisée pour corriger les mesures de la pression PS3. Toutefois cette hypothèse n'est pas limitative, d'autres mesures de pression de flux gazeux circulant dans le turboréacteur peuvent être corrigées. En particulier, l'invention permet également de corriger une mesure moteur de la pression atmosphérique PO à l'aide d'une mesure avion de cette même pression atmosphérique.

## Revendications

1. Procédé de correction d'une mesure courante (M1) de pression d'un flux gazeux circulant à l'intérieur d'un moteur (2) propulsant un aéronef (3), cette mesure étant délivrée au cours d'une mission de l'aéronef par un capteur (4) embarqué dans le moteur, ce procédé de correction comportant :

   - une étape d'estimation (E50) d'une erreur de dérive ($\varepsilon$) affectant le capteur, à partir d'une différence existant entre :

      o une mesure de calibrage de la pression du flux gazeux, délivrée par le capteur (4) embarqué dans le moteur (2) ; et
      o une mesure de pression atmosphérique délivrée par un capteur (5) de l'aéronef (3), ce capteur de l'aéronef étant doté d'une précision de mesure supérieure à celle du capteur embarqué dans le moteur ;

   la mesure de calibrage et la mesure de pression atmosphérique étant réalisées dans des conditions pour lesquelles le capteur embarqué dans le moteur et le capteur de l'aéronef sont soumis à une même pression atmosphérique environnante ; et
   - une étape de soustraction (F30) de l'erreur de dérive estimée à la mesure courante de pression du flux gazeux.

**2.** Procédé de correction d'une mesure selon la revendication 1, dans lequel les conditions dans lesquelles sont réalisées la mesure de calibrage et la mesure de pression atmosphérique coïncident avec un arrêt du moteur (2) et un maintien de l'aéronef (3) immobile au sol.

**3.** Programme d'ordinateur (S) comportant des instructions pour l'exécution des étapes du procédé de correction selon la revendication 1 ou 2 lorsque ledit programme est exécuté par un ordinateur.

**4.** Support d'enregistrement lisible par un ordinateur sur lequel est enregistré un programme d'ordinateur comprenant des instructions pour l'exécution des étapes du procédé de correction selon la revendication 1 ou 2.

**5.** Dispositif de correction (1) d'une mesure (M1) courante de pression d'un flux gazeux circulant à l'intérieur d'un moteur propulsant un aéronef, cette mesure étant délivrée au cours d'une mission de l'aéronef (3) par un capteur (4) embarqué dans le moteur (2), ce dispositif comportant :

- des moyens pour acquérir :

  o une mesure de calibrage de la pression du flux gazeux, délivrée par le capteur (4) embarqué dans le moteur ; et
  o une mesure de pression atmosphérique délivrée par un capteur (5) de l'aéronef, ce capteur de l'aéronef étant doté d'une précision de mesure supérieure à celle du capteur embarqué dans le moteur ;

la mesure de calibrage et la mesure de pression atmosphérique étant réalisées dans des conditions pour lesquelles le capteur embarqué dans le moteur et le capteur de l'aéronef sont soumis à une même pression atmosphérique environnante ;
- des moyens pour estimer une erreur de dérive affectant le capteur embarqué dans le moteur à partir d'une différence existant entre la mesure de calibrage et la mesure de pression atmosphérique ; et
- des moyens pour soustraire, à la mesure courante de pression du flux gazeux, l'erreur de dérive estimée.

**6.** Turbomachine (2) comprenant un dispositif (1) selon la revendication 5.

**7.** Système de mesure de pression d'un flux gazeux circulant à l'intérieur d'un moteur propulsant un aéronef (3) comprenant :

- un premier capteur (4) de pression du flux gazeux, ce premier capteur étant embarqué dans le moteur ;
- un second capteur (5) de pression atmosphérique, embarqué dans l'aéronef à l'extérieur du moteur et doté d'une précision de mesure supérieure à celle du premier capteur ;
- des moyens de déclenchement :

  o d'une mesure de calibrage de la pression du flux gazeux par le premier capteur ; et
  o d'une mesure de la pression atmosphérique par le second capteur ;

dans des conditions pour lesquelles le premier capteur et le second capteur de l'aéronef sont soumis à une même pression atmosphérique environnante ; et
- un dispositif de correction (1) selon la revendication 5, adapté à corriger une mesure courante de pression délivrée au cours d'une mission de l'aéronef par le premier capteur et à estimer l'erreur de dérive affectant le premier capteur à partir d'une différence existant entre la mesure de pression atmosphérique et la mesure de calibrage.

**Patentansprüche**

**1.** Verfahren zum Korrigieren eines laufenden Messwertes (M1) des Drucks eines Gasstroms, der in einem ein Luftfahrzeug (3) antreibenden Triebwerk (2) zirkuliert, wobei dieser Messwert im Laufe eines Einsatzes des Luftfahrzeugs durch einen in dem Triebwerk angeordneten Sensor (4) geliefert wird, wobei dieses Korrekturverfahren umfasst:

- einen Schritt zum Schätzen (E50) eines den Sensor betreffenden Abweichungsfehlers ($\varepsilon$) anhand einer Differenz zwischen:

  ◦ einem Kalibrierungsmesswert des Drucks des Gasstroms, der durch den in dem Triebwerk (2) angeordneten Sensor (4) geliefert wird, und
  ◦ einem Messwert des atmosphärischen Drucks, der durch einen Sensor (5) des Luftfahrzeugs (3) geliefert wird, wobei dieser Sensor des Luftfahrzeugs eine höhere Messgenauigkeit als der in dem Triebwerk angeordnete Sensor aufweist,

wobei die Kalibrierungsmessung und die Messung des atmosphärischen Drucks unter Bedingungen durchgeführt werden, bei denen der in dem Triebwerk angeordnete Sensor und der Sensor des Luftfahrzeugs einem gleichen atmosphärischen Umgebungsdruck ausgesetzt sind, und
- einen Schritt zum Subtrahieren (F30) des geschätzten Abweichungsfehlers von dem laufenden Messwert des Drucks des Gasstroms.

2. Verfahren zum Korrigieren eines Messwertes nach Anspruch 1, wobei die Bedingungen, unter denen die Kalibrierungsmessung und die Messung des atmosphärischen Drucks durchgeführt werden, mit einem Anhalten des Triebwerks (2) und einem Stillhalten des Luftfahrzeugs (3) am Boden zusammenfallen.

3. Computerprogramm (S), umfassend Befehle für die Ausführung der Schritte des Korrekturverfahrens nach Anspruch 1 oder 2, wenn das Programm durch einen Computer ausgeführt wird.

4. Durch einen Computer lesbarer Aufzeichnungsträger, auf dem ein Computerprogramm, das Befehle für die Ausführung der Schritte des Korrekturverfahrens nach Anspruch 1 oder 2 umfasst, gespeichert ist.

5. Vorrichtung zum Korrigieren (1) eines laufenden Messwertes (M1) des Drucks eines Gasstroms, der in einem ein Luftfahrzeug antreibenden Triebwerk zirkuliert, wobei dieser Messwert im Laufe eines Einsatzes des Luftfahrzeugs (3) durch einen in dem Triebwerk (2) angeordneten Sensor (4) geliefert wird, wobei diese Vorrichtung umfasst:

   - Mittel zum Erfassen:

     ◦ eines Kalibrierungsmesswertes des Drucks des Gasstroms, der durch den in dem Triebwerk angeordneten Sensor (4) geliefert wird, und
     ◦ eines Messwertes des atmosphärischen Drucks, der durch einen Sensor (5) des Luftfahrzeugs geliefert wird, wobei dieser Sensor des Luftfahrzeugs eine höhere Messgenauigkeit als der in dem Triebwerk angeordnete Sensor aufweist,

   wobei die Kalibrierungsmessung und die Messung des atmosphärischen Drucks unter Bedingungen durchgeführt werden, bei denen der in dem Triebwerk angeordnete Sensor und der Sensor des Luftfahrzeugs einem gleichen atmosphärischen Umgebungsdruck ausgesetzt sind,
   - Mittel zum Schätzen eines den in dem Triebwerk angeordneten Sensor betreffenden Abweichungsfehlers anhand einer Differenz zwischen dem Kalibrierungsmesswert und dem Messwert des atmosphärischen Drucks, und

   - Mittel zum Subtrahieren des geschätzten Abweichungsfehlers von dem laufenden Messwert des Drucks des Gasstroms.

6. Turbomaschine (2), umfassend eine Vorrichtung (1) nach Anspruch 5.

7. System zur Messung des Drucks eines Gasstroms, der in einem ein Luftfahrzeug (3) antreibenden Triebwerk zirkuliert, umfassend:

   - einen ersten Sensor (4) für den Druck des Gasstroms, wobei dieser erste Sensor in dem Triebwerk angeordnet ist,
   - einen zweiten Sensor (5) für den atmosphärischen Druck, der in dem Luftfahrzeug außerhalb des Triebwerks angeordnet ist und eine höhere Messgenauigkeit als der erste Sensor aufweist,
   - Mittel zum Auslösen:
   - ◦ einer Kalibrierungsmessung des Drucks des Gasstroms durch den ersten Sensor, und

     ◦ einer Messung des atmosphärischen Drucks durch den zweiten Sensor,

   unter Bedingungen, bei denen der erste Sensor und der zweite Sensor des Luftfahrzeugs einem gleichen atmosphärischen Umgebungsdruck ausgesetzt sind, und
   - eine Korrekturvorrichtung (1) nach Anspruch 5, die dazu ausgelegt ist, einen laufenden Druckmesswert, der im Laufe eines Einsatzes des Luftfahrzeugs durch den ersten Sensor geliefert wird, zu korrigieren und den den ersten Sensor betreffenden Abweichungsfehler anhand einer Differenz zwischen dem Messwert des atmosphärischen Drucks und dem Kalibrierungsmesswert zu schätzen.

**Claims**

1. A method of correcting a current measurement (M1) of the pressure of a gas stream flowing inside an engine (2) propelling an aircraft (3), this measurement being delivered during a mission of the aircraft by a sensor (4) in the engine, the correction method comprising:

   an estimation step (E50) of estimating a drift error ($\varepsilon$) affecting the sensor, on the basis of a difference existing between:

     • a calibration measurement of the pressure of the gas stream delivered by the sensor (4) in the engine (2); and
     • a measurement of atmospheric pressure delivered by a sensor (5) of the aircraft (3), the aircraft sensor presenting measurement accuracy greater than that of the sensor in the engine;

the calibration measurement and the atmospheric pressure measurement being performed under conditions in which the sensor in the engine and the aircraft sensor are subjected to the same surrounding atmospheric pressure; and
• a subtraction step (F30) of subtracting the estimated drift error from the current measurement of the pressure of the gas stream.

2. A method of correcting a measurement according to claim 1, wherein the conditions in which the calibration measurement and the atmospheric pressure measurement are performed coincide with the engine (2) being stopped and the aircraft (3) being stationary on the ground.

3. A computer program (S) including instructions for executing steps of the correction method of claim 1 or claim 2 when said program is executed by a computer.

4. A computer-readable recording medium having recorded thereon a computer program including instructions for executing steps of the correction method according to claim 1 or claim 2.

5. A correction device (1) for correcting a current measurement (M1) of pressure of a gas stream flowing inside an engine propelling an aircraft, the measurement being delivered during a mission of the aircraft (3) by a sensor (4) in the engine (2), the device comprising:

    • means for acquiring:

        • a calibration measurement of the pressure of the gas stream as delivered by the sensor (4) in the engine; and
        • an atmospheric pressure measurement as delivered by a sensor (5) of the aircraft, the aircraft sensor presenting measurement accuracy greater than that of the sensor in the engine;

    the calibration measurement and the atmospheric pressure measurement being performed under conditions in which the sensor in the engine and the aircraft sensor are subjected to the same surrounding atmospheric pressure;
    • means for estimating a drift error affecting the sensor in the engine from a difference existing between the calibration measurement and the atmospheric pressure measurement; and
    • means for subtracting the estimated drift error from the current measurement of the pressure of the gas stream.

6. A turbomachine (2) including a device (1) according to claim 5.

7. A system for measuring the pressure of a gas stream flowing inside an engine propelling an aircraft (3), the system comprising:

    • a first sensor (4) for sensing the pressure of the gas stream, the first sensor being in the engine;
    • a second sensor (5) for sensing atmospheric pressure, the second sensor being in the aircraft outside the engine and presenting measurement accuracy greater than that of the first sensor;
    • means for triggering:

        • a calibration measurement of the pressure of the gas stream by the first sensor; and
        • an atmospheric pressure measurement by the second sensor;

    under conditions in which the first and second sensors are subjected to the same surrounding atmospheric pressure; and
    • a correction device (1) according to claim 5, adapted to correct a current pressure measurement delivered during a mission of the aircraft by the first sensor and to estimate the drift error affecting the first sensor on the basis of a difference existing between the atmospheric pressure measurement and the calibration measurement.

FIG.1

FIG.2

DEMARRAGE AVION — E10

φCaL

CONDITIONS
VALIDES POUR
ESTIMATION
DE ε ? — E20

NON

E30 — STOP

OUI

ACQUISITION DES MESURES
M1Cal(PS3) ET M2(P0) — E40

**FIG.3A**

EVALUATION DE
L'ERREUR DE DERIVE ε — E50

ERREUR DE DERIVE ε

DEMARRAGE DU
TURBOREACTEUR — F10

φCorr

ACQUISITION DE LA MESURE
COURANTE DE PRESSION PS3
DELIVREE PAR LE CAPTEUR 4 — F20

**FIG.3B**

SOUSTRACTION DE
L'ERREUR DE DERIVE ε A
LA MESURE COURANTE — F30

MESURE COURANTE CORRIGEE

**EP 2 536 921 B1**

## RÉFÉRENCES CITÉES DANS LA DESCRIPTION

**Documents brevets cités dans la description**

- EP 0188909 A